# EUROPÄISCHE PATENTANMELDUNG

(11) **EP 4 641 158 A1**
(43) Veröffentlichungstag der Anmeldung: **29.10.2025**
(21) Anmeldenummer: 25171298.0
(22) Anmeldetag: 17.04.2025
(51) Int. Cl.: G01M 3/28, H01B 13/00, H01R 4/18

(54) **VERFAHREN ZUR DICHTIGKEITSPRÜFUNG AN EINEM KABEL SOWIE PRÜFVORRICHTUNG HIERFÜR**

(30) Priorität: 23.04.2024 DE 102024203779
(71) Anmelder: LEONI Wiring Systems Slovakia spol. s r.o., 911 01 Trencin (SK); LEONI Bordnetz-Systeme GmbH, 97318 Kitzingen (DE)
(72) Erfinder: EGBERS, Andreas, 97340 Marktbreit (DE); RAHMAN, Mehbub-Ur, 97318 Kitzingen (DE); TERLETSKYY, Andriy, 91101 Trencín (SK)
(74) Vertreter: FDST Patentanwälte

(57) **Zusammenfassung**

Es wird ein Verfahren angegeben, zur Dichtigkeitsprüfung an einem Kabel (2) mittels einer Prüfvorrichtung (4), wobei das Kabel (2) wenigstens zwei Endstücke (6), einen Mantel (8) und einen Leiter (10) aufweist, wobei der Mantel (8) und der Leiter (10) sich zwischen den beiden Endstücken (6) erstrecken, wobei der Mantel (8) einen Innenraum (12) umschließt, in welchem der Leiter (10) angeordnet ist, wobei das Kabel (2) innerhalb des Innenraums (12) einen parasitären Hohlraum (14) aufweist, durch welchen zwischen den Endstücken (6) eine fluidische Verbindung ausgebildet ist, wobei die Prüfvorrichtung (4) für jedes Endstück (6) einen Dichtkäfig (16) aufweist, in welchem mit einem Prüfmedium (M) ein Druck einstellbar ist, wobei jedes Endstück (6) in einen der Dichtkäfige (16) eingesetzt wird oder ist, sodass der parasitäre Hohlraum (14) mit den Dichtkäfigen (16) fluidisch verbunden ist, wobei mittels des Prüfmediums (M) eine Dichtigkeitsprüfung an wenigstens einem der Endstücke (6) durchgeführt wird, während in allen Dichtkäfigen (16) ein jeweiliger Druck eingestellt ist. Weiterhin wird eine entsprechende Prüfvorrichtung (4) angegeben.

## Beschreibung

Die Erfindung betrifft ein Verfahren zur Dichtigkeitsprüfung an einem Kabel sowie eine Prüfvorrichtung, welche ausgebildet ist zur Durchführung eines solchen Verfahrens.

Ein Kabel dient zur Übertragung von elektrischer Energie, z.B. von einem Energiespeicher zu einem Verbraucher, oder eines elektrischen Signals, z.B. zwischen zwei Geräten. Das Kabel kann eine einfache Leitung sein oder ein demgegenüber komplexerer Kabelbaum oder Vergleichbares. Je nach Verwendungszweck werden an das Kabel besondere Anforderungen hinsichtlich der Dichtigkeit des Kabels gegenüber bestimmten Medien, z.B. Luft oder Wasser, gestellt. Beispielsweise ist das Kabel ein Teil eines Bordnetzes eines Kraftfahrzeugs und somit regelmäßig starken Umgebungseinflüssen wie Schmutz und Feuchtigkeit ausgesetzt. Die Dichtigkeit eines solchen Kabels wird dann während oder nach der Herstellung des Kabels im Rahmen einer Dichtigkeitsprüfung geprüft. Besteht das Kabel die Dichtigkeitsprüfung, wird es zur weiteren Verwendung freigegeben, ansonsten nicht.

Das Kabel selbst ist aus verschiedenen Elementen zusammengesetzt, z.B. aus einem Mantel, einem Leiter und einer Anzahl an Steckverbindern. Bei der Dichtigkeitsprüfung soll vorrangig die Dichtigkeit der Steckverbinder geprüft werden. Hierzu werden die Steckverbinder in einer Prüfvorrichtung mit einem Prüfmedium bei einem bestimmten Druck beaufschlagt und dann überwacht, wie sich der Druck mit der Zeit entwickelt, um dann auf eine Leckage oder dergleichen zu schließen. Eine entsprechende Prüfvorrichtung ist beispielsweise beschrieben in der unveröffentlichten deutschen Patentanmeldung Nr. 10 2023 212 790.3.

Die Genauigkeit der Dichtigkeitsprüfung ist aber gegebenenfalls beschränkt, z.B. bei Verwendung eines Litzenleiters als Leiter, da hier zwischen den einzelnen Litzen des Litzenleiters mehrere Zwischenräume gebildet werden, durch welche das Prüfmedium entweichen kann, zusätzlich zum Entweichen über eine Leckage. Dieser zusätzliche Weg kann das Ergebnis der Dichtigkeitsprüfung verfälschen und beschränkt jedenfalls die bei der Dichtigkeitsprüfung erzielbare Genauigkeit.

Vor diesem Hintergrund ist es eine Aufgabe der Erfindung, die Dichtigkeitsprüfung an einem Kabel zu verbessern. Hierzu sollen ein verbessertes Verfahren zur Dichtigkeitsprüfung sowie eine hierfür geeignete Prüfvorrichtung angegeben werden. Insbesondere soll die Genauigkeit der Dichtigkeitsprüfung verbessert werden.

Die Aufgabe wird erfindungsgemäß gelöst durch ein Verfahren zur Dichtigkeitsprüfung an einem Kabel mittels einer Prüfvorrichtung, wobei das Kabel wenigstens zwei Endstücke, einen Mantel und einen Leiter aufweist, wobei der Mantel und der Leiter sich zwischen den beiden Endstücken erstrecken, wobei der Mantel einen Innenraum umschließt, in welchem der Leiter angeordnet ist, wobei das Kabel innerhalb des Innenraums einen parasitären Hohlraum (kurz auch nur "Hohlraum") aufweist, durch welchen zwischen den Endstücken eine fluidische Verbindung ausgebildet ist, wobei die Prüfvorrichtung für jedes Endstück einen Dichtkäfig aufweist, in welchem mit einem Prüfmedium, insbesondere Luft, ein Druck einstellbar ist, wobei jedes Endstück in einen der Dichtkäfige eingesetzt wird oder ist, sodass der parasitäre Hohlraum mit den Dichtkäfigen fluidisch verbunden ist, wobei mittels des Prüfmediums eine Dichtigkeitsprüfung an wenigstens einem der Endstücke durchgeführt wird, während in allen Dichtkäfigen ein jeweiliger Druck, insbesondere Prüfdruck, eingestellt ist. Mit anderen Worten: zuerst wird in allen Endstücken, welche über den parasitären Hohlraum fluidisch verbunden sind, ein Druck eingestellt und erst dann, wenn dieser Druck eingestellt ist, wird die tatsächliche Dichtigkeitsprüfung durchgeführt. Der Druck, welcher eingestellt wird, ist vorzugsweise ein Überdruck, größer als ein Umgebungsdruck und/oder größer als 1,1 bar. Vorzugsweise ist der Druck, welcher in einem jeweiligen Dichtkäfig eingestellt wird, ein Prüfdruck für das Endstück in diesem Dichtkäfig. Das genannte Einstellen des Drucks vor der eigentlichen Dichtigkeitsprüfung ist zweckmäßigerweise ein Teil des erfindungsgemäßen Verfahrens.

Vorliegend wird ohne Beschränkung der Allgemeinheit davon ausgegangen, dass der Druck im Dichtkäfig ein Überdruck ist und dann das Prüfmedium aus dem Dichtkäfig entweicht. Äquivalent und nachfolgend nicht im Detail beschrieben ist eine Ausgestaltung, bei welcher der Druck ein Unterdruck ist, d.h. geringer als der Umgebungsdruck, sodass sich eine umgekehrte Strömungsrichtung ergibt und das Prüfmedium oder gegebenenfalls sogar Umgebungsluft in den Dichtkäfig einströmt.

Vorliegend wird ohne Beschränkung der Allgemeinheit davon ausgegangen, dass das Kabel genau zwei Endstücke aufweist, die Ausführungen gelten aber analog auch für Kabel mit mehr als zwei Endstücken.

Die Aufgabe wird weiterhin gelöst durch eine Prüfvorrichtung, welche ausgebildet ist zur Durchführung des Verfahrens, insbesondere in Kombination mit einem Kabel wie beschrieben.

Die Aufgabe wird insbesondere auch gelöst durch ein Verfahren zum Betrieb einer Prüfvorrichtung wie beschrieben.

Vorteilhafte Ausgestaltungen, Weiterbildungen und Varianten sind Gegenstand der Unteransprüche. Die Ausführungen im Zusammenhang mit dem Verfahren zur Dichtigkeitsprüfung gelten sinngemäß auch für die Prüfvorrichtung und das Verfahren zu deren Betrieb sowie umgekehrt. Sofern nachfolgend implizit oder explizit Schritte der Verfahren beschrieben sind, ergeben sich vorteilhafte Ausgestaltungen für die Prüfvorrichtung dadurch, dass diese ausgebildet ist, einen oder mehrere dieser Schritte durchzuführen. Insbesondere hierzu weist die Prüfvorrichtung eine entsprechend ausgebildete Steuereinheit auf.

In einer geeigneten Ausgestaltung wird für die Dichtigkeitsprüfung in allen Dichtkäfigen der gleiche Druck eingestellt. Unter "gleich" wird insbesondere "gleich innerhalb einer etwaigen Toleranz" verstanden, welche sich z.B. konstruktionsbedingt oder bedingt durch die Genauigkeit der Ansteuerung der Prüfvorrichtung ergibt. Der Druck unterscheidet sich insbesondere vom Umgebungsdruck und ist relativ zum Umgebungsdruck ein Überdruck oder ein Unterdruck. Die Verwendung des gleichen Drucks für alle Endstücke führt zu einer maximalen Reduzierung des Entweichens von Prüfmedium in den Hohlraum (bei Überdruck; bei Unterdruck strömt analog das Prüfmedium in den Hohlraum ein) und somit zu einer maximalen Genauigkeit.

Nichtsdestoweniger ist es auch möglich, dass für die Endstücke unterschiedliche Drücke eingestellt werden, z.B. aufgrund voneinander abweichender Vorgaben und/oder Spezifikationen. In einer geeigneten Ausgestaltung weist dann jedes der Endstücke einen eigenen Druck auf, insbesondere Prüfdruck, welcher im jeweiligen Dichtkäfig eingestellt wird. Damit ergeben sich dann unter Umständen unterschiedliche Drücke in den Dichtkäfigen und somit ein nicht-optimaler Ausgleich, jedoch immer noch ein teilweiser Ausgleich, wodurch die Genauigkeit zumindest ein Wenig verbessert wird.

Bevorzugterweise wird bei der Dichtigkeitsprüfung gleichzeitig eine Dichtigkeit aller Endstücke des Kabels geprüft. Da ohnehin bereits alle Endstücke mit einem Druck, insbesondere dem jeweiligen Prüfdruck, beaufschlagt sind, ist es möglich, deren Dichtigkeit gleichzeitig zu prüfen und die Dichtigkeitsprüfung entsprechend schneller zu vollenden.

In einer zweckmäßigen Ausgestaltung weist die Prüfvorrichtung eine Steuereinheit auf, mit welcher das Verfahren umgesetzt wird. Die Dichtigkeitsprüfung wird insbesondere zentral von der Steuereinheit gesteuert. Hierzu sind alle Dichtkäfige mit der Steuereinheit verbunden, z.B. über ein Bussystem der Prüfvorrichtung. Die Steuerung der Dichtkäfige, insbesondere der Sensoren und Medienzufuhren, wird z.B. mittels entsprechender Schalter, Relais und/oder digitaler Ein-/Ausgabeanschlüsse realisiert.

Bevorzugterweise überwacht die Steuereinheit, ob alle Endstücke in einen jeweiligen Dichtkäfig eingesetzt sind, z.B. mittels eines jeweiligen Präsenzsensors, und lässt die Dichtigkeitsprüfung erst dann zu (und führt diese auch durch), wenn alle Endstücke in einen jeweiligen Dichtkäfig eingesetzt sind und dort auch insbesondere der jeweils einzustellende Druck eingestellt ist. Anstatt also das Einstecken eines Endstücks in einen der Dichtkäfige z.B. mittels eines Schaltkontakts zu erkennen und daraufhin sofort an dem entsprechenden Endstück automatisch eine Dichtigkeitsprüfung durchzuführen, wird abgewartet, bis alle Endstücke in einen jeweiligen Dichtkäfig eingesetzt sind, bevor dann die Dichtigkeitsprüfung durchgeführt wird. Die erstgenannte Lösung hat zwar den Vorteil eines möglichst schnellen Beginns der Dichtigkeitsprüfung, verhindert aber die erfindungsgemäße Unterbindung des Entweichens oder Einströmens des Prüfmediums in den parasitären Hohlraum.

Geeigneterweise weisen die Dichtkäfige jeweils einen Sensor auf, mit welchem bei der Dichtigkeitsprüfung ein Entweichen oder Einströmen des Prüfmediums gemessen wird. Ein jeweiliger Sensor ist z.B. ein Drucksensor oder ein Durchflusssensor. Mit dem Sensor wird z.B. der Druck im Dichtkäfig als Funktion der Zeit gemessen und daraus dann eine Leckage des Endstücks abgeleitet. Insbesondere wird jedes Endstück mit einem eigenen Sensor geprüft, im Gegensatz zu einer Ausgestaltung, bei welcher ein zentraler Sensor verwendet wird, um zeitlich nacheinander mehrere Endstücke zu prüfen. Das vorliegende Verfahren ist dann vorteilhafterweise parallelisiert, sodass dann die Dichtigkeitsprüfung an mehreren oder allen Endstücken gleichzeitig mit einem jeweiligen Sensor durchgeführt wird.

Bei der hier beschriebenen Lösung ist eine Verortung der Leckage möglicherweise erschwert, da die Endstücke fluidisch verbunden sind und gegebenenfalls auch gleichzeitig geprüft werden. Die Dichtigkeitsprüfung an einem Endstück beeinflusst also potentiell die Dichtigkeitsprüfung an einem anderen Endstück. Daher erfolgt geeigneterweise eine intelligente Auswertung, um dasjenige Endstück mit der größten Leckage zu identifizieren, da dieses dann sehr wahrscheinlich tatsächlich undicht ist. Mittels einer entsprechend ausgebildeten Steuereinheit der Prüfvorrichtung werden die Ergebnisse der Dichtigkeitsprüfung der einzelnen Endstücke gemeinsam ausgewertet und dann daraus ein entsprechendes Ergebnis abgeleitet und ausgegeben. Dies ist insbesondere durch die oben genannte Verwendung mehrerer Sensoren möglich, nämlich je eines eigenen Sensors für jede Kombination aus Dichtkäfig und Endstück. In einer bevorzugten Ausgestaltung wird für jedes Endstück eine Leckage gemessen, z.B. als Druckabfall über ein bestimmtes Zeitintervall, und dasjenige Endstück wird als undicht erkannt, welches die größte Leckage aufweist. Optional wird die Leckage zusätzlich noch mit einem vorgegebenen Grenzwert verglichen und das Endstück erst dann als undicht erkannt, wenn die Leckage zusätzlich auch den Grenzwert überschreitet. Der Grenzwert ist z.B. ein absoluter Grenzwert oder ein Grenzwert relativ zu den Leckagen, welche für die anderen Endstücke gemessen werden.

Der Mantel ist insbesondere aus einem elektrisch isolierenden Material hergestellt und wird dann auch als Isolierung bezeichnet. Der Leiter ist aus einem elektrisch leitenden Material hergestellt, z.B. Kupfer. Bevorzugterweise ist der Leiter ein Litzenleiter mit mehreren Drähten und der parasitäre Hohlraum entspricht wenigstens einem Zwickel, welcher durch die Drähte gebildet ist. Alternativ oder zusätzlich ist der parasitäre Hohlraum zwischen dem Mantel und dem Leiter ausgebildet. Insbesondere weist der Leiter eine Außenkontur auf, welche teilweise an einer Innenkontur des Mantels anliegt, sodass ein entsprechender parasitärer Hohlraum gebildet ist.

In einer bevorzugten Ausgestaltung ist wenigstens eines der Endstücke ein Steckverbinder, z.B. Stecker oder Buchse. Geeigneterweise weist wenigstens eines der Endstücke ein Gehäuse auf und ein Terminal, welches endseitig an dem Leiter befestigt ist und in das Gehäuse eingesetzt ist. Mit anderen Worten: der Leiter insbesondere mit einem Terminal konfektioniert, d.h. am Leiter ist endseitig ein Terminal befestigt. Das Terminal ist insbesondere ein Teil Endstücks, sodass also der Leiter mit dem Endstück verbunden ist. Der Leiter und auch der Mantel laufen gemeinsam durch ein entsprechendes Loch im Gehäuse in dieses ein. Das Loch ist zweckmäßigerweise mit einer Dichtung (z.B. eine Tülle) abgedichtet, durch welche der Mantel und der Leiter dann hindurch und in das Gehäuse hinein laufen. Die Dichtung dient insbesondere auch zum Abdichten des Endstücks beim bestimmungsgemäßen Gebrauch des Kabels und die Dichtigkeit der Dichtung ist somit zweckmäßigerweise, jedoch nicht zwingend, Gegenstand der vorliegend durchgeführten Dichtigkeitsprüfung. Geeignet ist aber auch eine Ausgestaltung, bei welcher der Mantel und das Gehäuse einstückig (monolithisch) hergestellt sind oder zumindest stoffschlüssig miteinander verbunden sind. Das Terminal selbst ist insbesondere auch am Gehäuse befestigt, z.B. darin eingesteckt. Das Terminal bildet insbesondere einen elektrischen Anschluss des Kabels zum Anschließen z.B. an ein Gerät. Entsprechend weist das Gehäuse insbesondere eine Öffnung auf, z.B. ein Steckgesicht, über welche das Terminal zugänglich ist. Diese Öffnung weist bei der Dichtigkeitsprüfung in den Dichtkäfig hinein und ist somit gegenüber der Umgebung abgedichtet. Durch die Öffnung gelangt das Prüfmedium auch in das Gehäuse, um dessen Dichtigkeit zu prüfen. Von hier aus gelangt das Prüfmedium dann prinzipiell auch in den parasitären Hohlraum. Vorstehende Ausführungen gelten vorzugsweise für alle Endstücke.

Das Terminal ist beispielsweise ein Crimp, welcher endseitig am Leiter angeschlagen und somit befestigt ist. In einer bevorzugten Ausgestaltung ist das Terminal ein Isolationscrimp, welcher zusätzlich auch am Mantel befestigt ist. Durch die zusätzliche Befestigung am Mantel ergibt sich auch eine vorteilhafte Zugentlastung.

Geeigneterweise weisen ein oder mehrere (z.B. alle) Endstücke jeweils eine Dichtung auf, zum Abdichten gegenüber dem jeweiligen Dichtkäfig. Die Dichtung dient insbesondere auch zum Abdichten des Endstücks beim bestimmungsgemäßen Gebrauch des Kabels und die Dichtigkeit der Dichtung ist somit zweckmäßigerweise, jedoch nicht zwingend, Gegenstand der vorliegend durchgeführten Dichtigkeitsprüfung. Die Dichtung als Teil des Endstücks ist beispielsweise eine Längsdichtung, welche beim Anschließen des Endstücks an ein komplementäres Gegenstück in Steckrichtung (d.h. Längsrichtung) gegen das Gegenstück gedrückt wird und dadurch dichtet. Alternativ oder zusätzlich ist die Dichtung ein Teil des Dichtkäfigs und nicht zwingend ein Teil des Endstücks, d.h. ein oder mehrere (z.B. alle) Dichtkäfige weisen jeweils eine Dichtung auf, zum Abdichten gegenüber dem jeweiligen Endstück. Die Abdichtung gegenüber dem jeweiligen Endstück erfolgt insbesondere dadurch, dass die Dichtung am Gehäuse des Endstücks dichtend anliegt. Dadurch wird ein Prüfraum gebildet, welcher von dem Endstück und dem Dichtkäfig umschlossen ist und durch die Dichtung auch dicht ist. Unabhängig davon, ob die Dichtung ein Teil des Endstücks oder des Dichtkäfigs ist, ist bei einer Ausgestaltung des Endstücks als ein Steckverbinder der Dichtkäfig vorteilhafterweise nach Art eines Gegensteckverbinders für diesen Steckverbinder ausgebildet, d.h. insbesondere wie der passende Gegensteckverbinder geformt, jedoch insbesondere ohne etwaige elektrische oder hydraulische Anschlüsse usw., d.h. sozusagen als "blinder" Gegensteckverbinder.

Als Alternative zu einer Abdichtung des Dichtkäfigs gegen das Endstück mittels einer Dichtung ist auch eine Ausgestaltung vorteilhaft, bei welcher das Endstück vollständig von dem Dichtkäfig umschlossen ist. Die Abdichtung erfolgt dann zweckmäßigerweise gegenüber dem Mantel, indem der Dichtkäfig eine Dichtung aufweist, welche am Mantel anliegt. In einer besonders geeigneten Ausgestaltung weist zumindest einer der Dichtkäfige zwei Teile auf, z.B. zwei Halbschalen oder eine Schale und einen Deckel, welche in zusammengesetztem Zustand einen Prüfraum umschließen, in welchen das Endstück vollständig eingesetzt ist. Das Endstück ist dann von dem Dichtkäfig vollständig umschlossen. Der Dichtkäfig weist weiterhin eine Dichtung auf, welche die beiden Teile gegeneinander abdichtet, z.B. ist die Dichtung an einem der Teile angebracht und wird in zusammengesetztem Zustand dann gegen das andere Teil gedrückt. Der Mantel ist durch die Dichtung aus dem Prüfraum herausgeführt, sodass die Dichtung insbesondere vollumfänglich dichtend am Mantel anliegt. Die Dichtung weist hierfür insbesondere einen Durchlass für den Mantel (und den Leiter) auf. Beispielsweise ist die Dichtung zweiteilig ausgebildet, mit einem ersten Dichtteil (z.B. Dichtring), welches den Prüfraum vollständig umläuft, und mit einem zweiten Dichtteil (z.B. Dichtstreifen), welcher mit dem ersten Dichtteil an einer Stelle den Durchlass für den Mantel bildet, sodass der Mantel beidseitig von der Dichtung eingefasst ist.

Die beiden Varianten mit Abdichtung gegen das Endstück und mit zweiteiligem Dichtkäfig sind auch derart kombinierbar, dass für ein oder mehrere Endstücke eine Abdichtung gegenüber dem Endstück selbst erfolgt und für ein oder mehrere andere Endstücke eine Abdichtung gegenüber dem Mantel, sodass das jeweilige Endstück vom Dichtkäfig vollständig umschlossen ist.

Ein Kerngedanke der Erfindung ist insbesondere eine synchronisierte und insbesondere komplexe Dichtigkeitsprüfung. Anstatt die verschiedenen Endstücke des Kabels unabhängig voneinander zu prüfen, werden diese gleichzeitig mit einem jeweiligen Druck beaufschlagt, um eine Verfälschung des Prüfergebnisses durch den parasitären Hohlraum zu reduzieren oder sogar gänzlich zu vermeiden. Hierbei wird insbesondere ausgenutzt, dass bei gleichzeitigem Anlegen eines Drucks an allen Enden des parasitären Hohlraums eine zusätzliche Leckage über diesen Hohlraum nicht mehr möglich ist oder zumindest nur eingeschränkt im Rahmen von gegebenenfalls unterschiedlichen Drücken an den Endstücken. In jedem Fall wird dadurch aber die Genauigkeit der Dichtigkeitsprüfung erhöht.

Die Erfindung geht insbesondere aus von der Beobachtung, dass die Genauigkeit einer Dichtigkeitsprüfung an einem Kabel konstruktionsbedingt beschränkt sein kann. Problematisch sind z.B. zusätzlich umdichtete Steckverbinder oder Leitungen des Kabels, wenn diese durch eine Dichtung hindurchlaufen sollen, da hier eine Leckage auftreten kann, welche nur schlecht überprüfbar ist. Entsprechend ist ein Verfahren denkbar, bei welchem nur eine Anwesenheitskontrolle kompletter Dichtungen erfolgt, deren Dichtigkeit im Detail dann aber nicht überprüft wird. Ebenso denkbar ist ein Verfahren, bei welchem auch die Dichtigkeit im Detail geprüft wird, was dann aber typischerweise durch den Aufbau des Kabels nur mit beschränkter Genauigkeit möglich ist. Vorliegend wurde beobachtet, dass besonders bei Litzenleitern mit endseitig angebrachten Crimps (auch: Crimpkontakte) keine vollständige Abdichtung entlang des Leiters erreicht wird, sodass hier das Prüfmedium entweichen oder einströmen kann. Genauer gesagt sind zwischen den einzelnen Drähten des Leiters einerseits sowie gegebenenfalls auch zwischen den Drähten und dem Mantel andererseits z.B. Zwickel gebildet, welche dann einen oder mehrere parasitäre Hohlräume bilden, durch welche das Prüfmedium entweichen oder einströmen kann. Bei der Dichtigkeitsprüfung ergibt sich ein entsprechender Druckverlust, welcher das Prüfergebnis verfälscht. Je nach Größe des Hohlraums, d.h. je nach konkreter Ausgestaltung des Kabels, z.B. hinsichtlich Anzahl und Querschnitt der einzelnen Drähte des Leiters, kann die Dichtigkeitsprüfung entsprechend sehr ungenau werden. Beim Anschlagen des Crimps wird typischerweise keine genügend große Kraft aufgebracht, um die parasitären Hohlräume vollständig zu verschließen.

Daher werden vorliegend vorteilhafterweise Beginn und/oder Durchführung der verschiedenen Messungen zur Dichtigkeitsprüfung für die diversen Endstücke so weit wie möglich synchronisiert, d.h. möglichst gleichzeitig durchgeführt, sodass sich die zusätzlichen Leckagen in den parasitären Hohlraum gegenseitig so weit wie möglich aufheben. Dadurch ist eine genauere Dichtigkeitsprüfung möglich, d.h. insbesondere eine genauere Messung, welche dann auch bessere und gezieltere Rückschlüsse auf die Qualität der eigentlich zu prüfenden Abdichtung z.B. in Form von Dichtungen des Kabels ermöglicht. Nichtsdestoweniger ist auch eine Ausgestaltung geeignet, bei welcher zunächst eine weniger genaue Dichtigkeitsprüfung durchgeführt wird, sobald ein einzelnes oder nur wenige Endstücke des Kabels an die Prüfvorrichtung angeschlossen und speziell in den Dichtkäfig eingesetzt ist beziehungsweise sind. Auf diese Weise wird die Anwesenheit einer Dichtung am Endstück zumindest qualitativ erkannt. Die genauere, synchronisierte und vorteilhaft quantitative Dichtigkeitsprüfung wie hier beschrieben folgt dann, sobald alle Endstücke an die Prüfvorrichtung angeschlossen sind. Ob ein jeweiliges Endstück angeschlossen ist, wird geeigneterweise mittels eines Präsenzsensors gemessen.

Grundsätzlich wird an wenigstens einem der Endstücke eine Dichtigkeitsprüfung durchgeführt, dieses Endstück wird auch als Prüf-Endstück bezeichnet. Vorliegend werden nun vorteilhafterweise zusätzlich zum Prüf-Endstück auch all diejenigen Endstücke des Kabels, welche über den parasitären Hohlraum mit dem Prüf-Endstück verbunden sind, mit einem jeweiligen Druck beaufschlagt, welcher einem Entweichen des Prüfmediums vom Prüf-Endstück durch den parasitären Hohlraum zu einem jeweils anderen Endstück entgegenwirkt (oder - bei Unterdruck - einem Einströmen in umgekehrter Richtung entgegenwirkt). Dabei bietet es sich insbesondere an, alle diese Endstücke, welche durch den parasitären Hohlraum fluidisch miteinander verbunden sind, gleichzeitig zu prüfen. Dies ist aber nicht zwingend, vielmehr ist es im Rahmen der Erfindung bereits ausreichend, dass dort wenigstens ein Druck anliegt, welcher ein Entweichen des Prüfmediums vom Prüf-Endstück durch den parasitären Hohlraum reduziert oder gänzlich verhindert. Außerdem wird idealerweise für alle Endstücke der gleiche Druck verwendet, um eine maximale Genauigkeit zu erzielen, auch dies ist aber nicht zwingend erforderlich, z.B. existieren für verschiedene Endstücke auch verschiedene Prüfvorgaben mit gegebenenfalls unterschiedlichen Prüfdrücken, wodurch die zusätzliche Leckage über den parasitären Hohlraum aber immer noch zumindest reduziert wird. Wesentlich ist insbesondere, dass in allen Endstücken, welche über den parasitären Hohlraum fluidisch verbunden sind, jeweils ein Druck derart eingestellt wird, dass sich die Drücke entgegenwirken, um ein Entweichen des Prüfmediums in den Hohlraum zu reduzieren oder gänzlich zu verhindern. Dieser Effekt ist umso stärker und die Genauigkeit entsprechend umso größer, je ähnlicher sich die Drücke sind.

Die Dichtigkeitsprüfung erfolgt allgemein an dem Kabel, genauer an dessen Endstücken. Entsprechend werden die Endstücke auch als "Messkörper" bezeichnet, da bei der Dichtigkeitsprüfung deren Dichtigkeit gemessen wird und geprüft wird, ob diese ausreichend ist oder nicht, z.B. durch Vergleich mit einem vorgegebenen Grenzwert. Das jeweilige Ergebnis wird dann von der Prüfvorrichtung ausgegeben.

Der parasitäre Hohlraum erstreckt sich prinzipbedingt entlang des Leiters und des Mantels und in die gleiche Richtung wie diese. Diese Richtung wird auch als Längsrichtung bezeichnet. Senkrecht zur Längsrichtung betrachtet weist das Kabel einen Querschnitt auf, in welchem der Mantel den Leiter und den parasitären Hohlraum insbesondere vollständig umgibt. Durch den Hohlraum ist zwischen den Endstücken eine fluidische Verbindung ausgebildet, d.h. ein Fluid, vorliegend speziell das Prüfmedium, kann durch den Hohlraum strömen. Der Hohlraum wird vorliegend als "parasitär" bezeichnet, da er sich vorrangig durch die Konstruktion des Kabels ergibt und nicht vorrangig dadurch, dass durch den Hohlraum ein bestimmtes Element oder Medium geführt sein soll. Der Hohlraum ist insbesondere hohl, d.h. lediglich mit Luft gefüllt und ansonsten leer. Der Hohlraum läuft insbesondere durchgängig, d.h. unterbrechungsfrei, von einem Endstück zum anderen.

Ein jeweiliger Dichtkäfig der Prüfvorrichtung dient als Aufnahme für ein jeweiliges Endstück. Die Dichtkäfige müssen nicht zwingen gleichartig ausgebildet sein, gleiches gilt für die Endstücke. Ein jeweiliger Dichtkäfig weist insbesondere eine Medienzufuhr für das Prüfmedium auf. Über die Medienzufuhr wird das Prüfmedium zum Endstück geströmt und dieses dann mit einem entsprechenden Druck beaufschlagt. Hierzu ist das Endstück gegen den Dichtkäfig abgedichtet und der Dichtkäfig selbst dann auch dicht. Beispielsweise weist der Dichtkäfig eine Vertiefung auf, mit einem Grund und einer Wandung, welche den Grund umläuft. Das Endstück wird in Richtung des Grunds in den Dichtkäfig eingesetzt und gegen die Wandung abgedichtet, z.B. durch eine entsprechende Dichtung als Teil des Endstücks oder des Dichtkäfigs, z.B. wie oben bereits beschrieben. Zwischen dem Endstück und dem Grund ist nun ein Volumen ausgebildet, in welches das Prüfmedium eingeströmt wird. Hierfür ist die Medienzufuhr zweckmäßigerweise in den Grund oder die Wandung integriert. Durch die Abdichtung wird dabei ein entsprechender Druck aufgebaut. Dieser Druck ist insbesondere größer als der Umgebungsdruck, sodass das Prüfmedium durch etwaige Leckagen in die Umgebung strömt, was dann insbesondere mit einem entsprechenden Sensor des Dichtkäfigs gemessen wird. Der Sensor ist entweder in die Wandung oder den Grund integriert oder separat hiervon ausgebildet und dann z.B. über eine geeignete Leitung mit dem beschriebenen Volumen im Dichtkäfig verbunden.

Ein Vorteil der Erfindung ist insbesondere eine genauere und schnellere Erkennung von Leckagen, d.h. Beschädigungen an Dichtungen an einem Kabel und dessen Endstücken. Das hier vorgestellte Verfahren ist besonders genau und für einen Bediener (Operator) der Prüfvorrichtung auch besonders aufwandsarm. Das hier vorgestellte Verfahren ist besonders geeignet zur Dichtigkeitsprüfung an einem Kabel mit Litzenleiter, an welchem endseitig ein Crimp als Terminal befestigt ist. Die Dichtigkeit solcher Kabel kann nun mit besonders hoher Genauigkeit geprüft werden. Ein Austausch des Leiters und/oder des Terminals ist entsprechend nicht erforderlich.

Nachfolgend werden Ausführungsbeispiele der Erfindung anhand einer Zeichnung näher erläutert. Darin zeigen jeweils schematisch:
- Fig. 1: ein Verfahren,
- Fig. 2: einen Druckverlust aufgrund eines parasitären Hohlraums,
- Fig. 3: eine Prüfvorrichtung und ein Kabel,
- Fig. 4: eine Variante der Prüfvorrichtung aus Fig. 3,
- Fig. 5: ausschnittsweise ein Kabel in einer perspektivischen Ansicht,
- Fig. 6: das Kabel aus Fig. 5 in einer Seitenansicht,
- Fig. 7: das Kabel aus Fig. 5 in einer Querschnittansicht,
- Fig. 8: eine weitere Variante der Prüfvorrichtung aus Fig. 3,
- Fig. 9: eine weitere Variante der Prüfvorrichtung aus Fig. 3,
- Fig. 10: ein Teil der Prüfvorrichtung aus Fig. 9 in einer anderen Ansicht,
- Fig. 11: ein anderer Teil der Prüfvorrichtung aus Fig. 9 in einer anderen Ansicht.

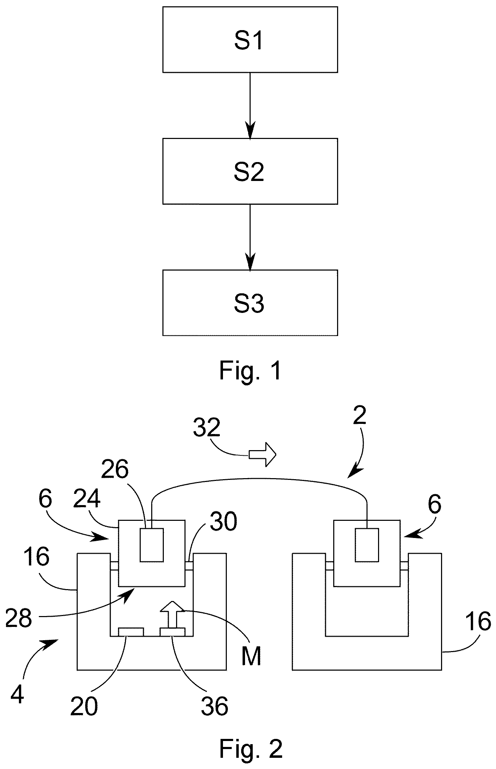

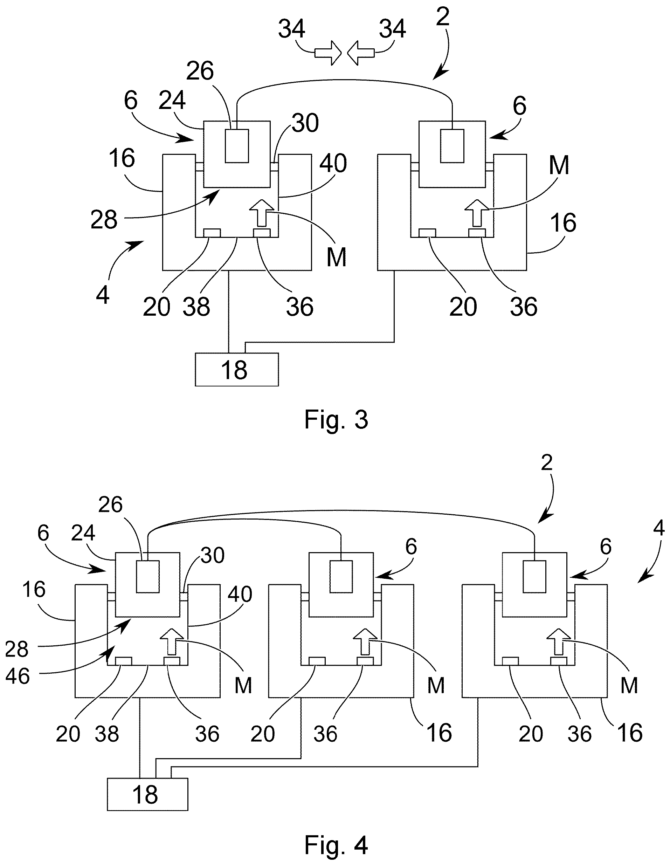

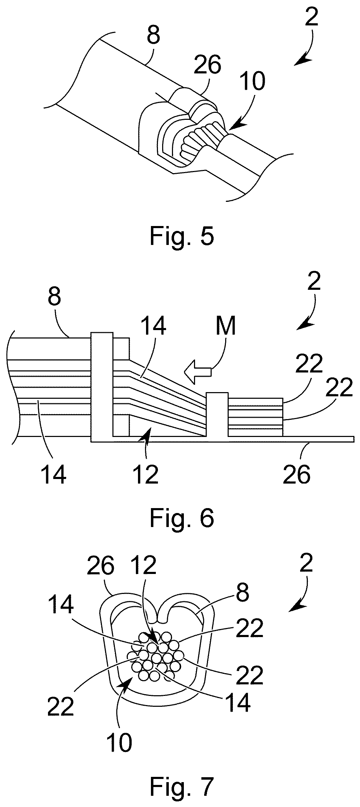

In Fig. 1 ist ein Ausführungsbeispiel für ein Verfahren zur Dichtigkeitsprüfung an einem Kabel 2 mittels einer Prüfvorrichtung 4 gezeigt. Weitere Ausführungsbeispiele für die Prüfvorrichtung 4 sind in den Fig. 3, 4 und 8 bis 11 gezeigt, ein Ausführungsbeispiel für das Kabel 2 ist in drei unterschiedlichen Ansichten in den Fig. 5, 6 und 7 gezeigt. Das Kabel 2 weist wenigstens zwei Endstücke 6 (in Fig. 4 drei Endstücke 6), einen Mantel 8 und einen Leiter 10 auf, wobei der Mantel 8 und der Leiter 10 sich zwischen den beiden Endstücken 6 erstrecken. Der Mantel 8 umschließt einen Innenraum 12, in welchem der Leiter 10 angeordnet ist. Das Kabel 2 weist innerhalb des Innenraums 12 einen parasitären Hohlraum 14 (kurz auch nur "Hohlraum") auf, durch welchen zwischen den Endstücken 6 eine fluidische Verbindung ausgebildet ist.

Wie in den Fig. 3, 4 und 8 bis 11 erkennbar ist, weist die Prüfvorrichtung 4 für jedes Endstück 6 einen Dichtkäfig 16 auf, in welchem mit einem Prüfmedium M, hier Luft, ein Druck einstellbar ist. Jedes Endstück 6 wird in einem ersten Schritt S1 in einen der Dichtkäfige 16 eingesetzt, sodass dann während der Dichtigkeitsprüfung jedes Endstück 6 in einen Dichtkäfig 16 eingesetzt ist. Auf diese Weise ist der parasitäre Hohlraum 14 mit den Dichtkäfigen 16 fluidisch verbunden. Mittels des Prüfmediums M wird nun eine Dichtigkeitsprüfung an wenigstens einem der Endstücke 6 durchgeführt, während in allen Dichtkäfigen 16 ein jeweiliger Druck eingestellt ist. Mit anderen Worten: zuerst wird in einem zweiten Schritt S2 in allen Endstücken 6, welche über den parasitären Hohlraum 14 fluidisch verbunden sind, ein Druck eingestellt und erst dann, wenn dieser Druck eingestellt ist, wird in einem dritten Schritt S3 die tatsächliche Dichtigkeitsprüfung durchgeführt. Der Druck, welcher eingestellt wird, ist vorliegend ein Überdruck, größer als ein Umgebungsdruck und/oder größer als 1,1 bar. Der Druck, welcher in einem jeweiligen Dichtkäfig 16 eingestellt wird, ist vorliegend ein Prüfdruck für das Endstück 6 in diesem Dichtkäfig 16.

In einer möglichen Ausgestaltung wird im zweiten Schritt S2 für die Dichtigkeitsprüfung in allen Dichtkäfigen 16 der gleiche Druck eingestellt. Dadurch ergibt sich eine maximale Genauigkeit bei der Dichtigkeitsprüfung. Alternativ ist es auch möglich, dass für die Endstücke 6 unterschiedliche Drücke eingestellt werden, z.B. aufgrund voneinander abweichender Vorgaben und/oder Spezifikationen. In einer möglichen Ausgestaltung weist dann jedes der Endstücke 6 einen eigenen Druck auf, insbesondere Prüfdruck, welcher im jeweiligen Dichtkäfig 16 eingestellt wird. Damit ergeben sich dann unter Umständen unterschiedliche Drücke in den Dichtkäfigen 16 und somit ein unter Umständen nicht-optimaler Ausgleich.

In den Fig. 3, 4 und 8 bis 11 wird bei der Dichtigkeitsprüfung im dritten Schritt S3 gleichzeitig eine Dichtigkeit aller Endstücke 6 geprüft. Die hier beispielhaft gezeigte Prüfvorrichtung 4 weist eine Steuereinheit 18 auf, mit welcher das Verfahren umgesetzt wird. Die Dichtigkeitsprüfung wird zentral von der Steuereinheit 18 gesteuert. Hierzu sind alle Dichtkäfige 16 mit der Steuereinheit 18 verbunden, z.B. über ein Bussystem der Prüfvorrichtung 4.

In der hier gezeigten Ausgestaltung überwacht die Steuereinheit 18, ob alle Endstücke 6 in einen jeweiligen Dichtkäfig 16 eingesetzt sind, und lässt die Dichtigkeitsprüfung im dritten Schritt S3 erst dann zu und führt diese auch durch, wenn alle Endstücke 6 in einen jeweiligen Dichtkäfig 16 eingesetzt sind und dort auch der jeweils einzustellende Druck eingestellt ist.

Die Dichtkäfige 16 weisen jeweils einen Sensor 20 auf, z.B. Drucksensor oder Durchflusssensor, mit welchem bei der Dichtigkeitsprüfung ein Entweichen oder Einströmen des Prüfmediums M gemessen wird. Vorliegend wird jedes Endstück 6 mit einem eigenen Sensor 20 geprüft, im Gegensatz zu einer Ausgestaltung, bei welcher ein zentraler Sensor verwendet wird, um zeitlich nacheinander mehrere Endstücke 6 zu prüfen. Das vorliegende Verfahren ist dann parallelisiert, sodass dann die Dichtigkeitsprüfung je an einem Endstück 6 gleichzeitig mit einem jeweiligen Sensor 20 durchgeführt wird.

Vorliegend erfolgt auch eine intelligente Auswertung, um dasjenige Endstück 6 mit der größten Leckage zu identifizieren, da dieses dann sehr wahrscheinlich tatsächlich undicht ist. Die Steuereinheit 18 ist entsprechend ausgebildet und wertet die Ergebnisse der Dichtigkeitsprüfung der einzelnen Endstücke 6 gemeinsam aus und leitet daraus ein entsprechendes Ergebnis ab, welches dann ausgegeben wird. Für jedes Endstück 6 wird dann eine Leckage gemessen, z.B. als Druckabfall über ein bestimmtes Zeitintervall, und dasjenige Endstück 6 wird als undicht erkannt, welches die größte Leckage aufweist. Optional wird die Leckage zusätzlich noch mit einem vorgegebenen Grenzwert verglichen und das Endstück 6 erst dann als undicht erkannt, wenn die Leckage zusätzlich auch den Grenzwert überschreitet.

Der Mantel 8 ist vorliegend aus einem elektrisch isolierenden Material hergestellt. Der Leiter 10 ist vorliegend aus einem elektrisch leitenden Material hergestellt. In den Fig. 5, 6 und 7 ist der Leiter 10 ein Litzenleiter mit mehreren Drähten 22 und der parasitäre Hohlraum 14 entspricht wenigstens einem Zwickel, welcher durch die Drähte 22 gebildet ist. Alternativ oder zusätzlich ist der parasitäre Hohlraum 14 zwischen dem Mantel 8 und dem Leiter 10 ausgebildet (nicht gezeigt).

In der hier gezeigten Ausgestaltung sind die Endstücke 6 jeweils ein Steckverbinder, z.B. Stecker oder Buchse. Jedes der Endstücke 6 weist ein Gehäuse 24 auf und ein Terminal 26, welches endseitig an dem Leiter 10 befestigt ist und in das Gehäuse 24 eingesetzt ist. In den Fig. 5, 6 und 7 ist zur besseren Übersichtlichkeit lediglich das Terminal 26 dargestellt und das Gehäuse 24 weggelassen. Das Terminal 26 ist ein Teil Endstücks 6, sodass also der Leiter 10 mit dem Endstück 6 verbunden ist. Der Leiter 10 und auch der Mantel 8 laufen gemeinsam durch ein entsprechendes Loch im Gehäuse 24 in dieses ein. Das Loch ist beispielsweise mit einer Dichtung (nicht gezeigt) abgedichtet, durch welche der Mantel 8 und der Leiter 10 dann hindurch und in das Gehäuse 24 hinein laufen. Möglich ist aber auch eine Ausgestaltung, bei welcher der Mantel 8 und das Gehäuse 24 einstückig (monolithisch) hergestellt sind oder zumindest stoffschlüssig miteinander verbunden sind. Das Terminal 26 selbst ist auch am Gehäuse 24 befestigt, z.B. darin eingesteckt. Das Terminal 26 bildet einen elektrischen Anschluss des Kabels 2 zum Anschließen z.B. an ein Gerät. Entsprechend weist das Gehäuse 24 insbesondere eine Öffnung 28 auf, z.B. ein Steckgesicht, über welche das Terminal 26 zugänglich ist. Diese Öffnung 28 weist bei der Dichtigkeitsprüfung in den Dichtkäfig 16 hinein und ist somit gegenüber der Umgebung abgedichtet. Durch die Öffnung 28 gelangt das Prüfmedium M auch in das Gehäuse 24, um dessen Dichtigkeit zu prüfen. Von hier aus gelangt das Prüfmedium M dann prinzipiell auch in den parasitären Hohlraum 14. Das Terminal 26 ist beispielsweise ein Crimp, welcher endseitig am Leiter 10 angeschlagen und somit befestigt ist, speziell z.B. ein Isolationscrimp (Fig. 5 bis 7), welcher zusätzlich auch am Mantel 8 befestigt ist.

Die Endstücke 6 weisen auch jeweils eine Dichtung 30 auf, zum Abdichten gegenüber dem jeweiligen Dichtkäfig 16. Alternativ ist eine jeweilige Dichtung 30 nicht ein Teil eines Endstücks 6, sondern ein Teil des jeweiligen Dichtkäfigs 16, d.h. die Dichtkäfige 16 weisen jeweils eine Dichtung 30 auf, zum Abdichten gegenüber dem jeweiligen Endstück 6. Auch eine Kombination ist möglich, bei welcher eine oder mehrere Dichtungen 30 jeweils Teil eines Endstücks 6 sind und ein oder mehrere andere Dichtungen 30 Teil eines Dichtkäfigs 16. In den Fig. 3, 4 und 8 bis 11 sind verschiedene Beispiele für Ausgestaltung und Anordnung der Dichtung 30 gezeigt, andere Ausgestaltungen und Anordnungen sind ebenfalls möglich und geeignet.

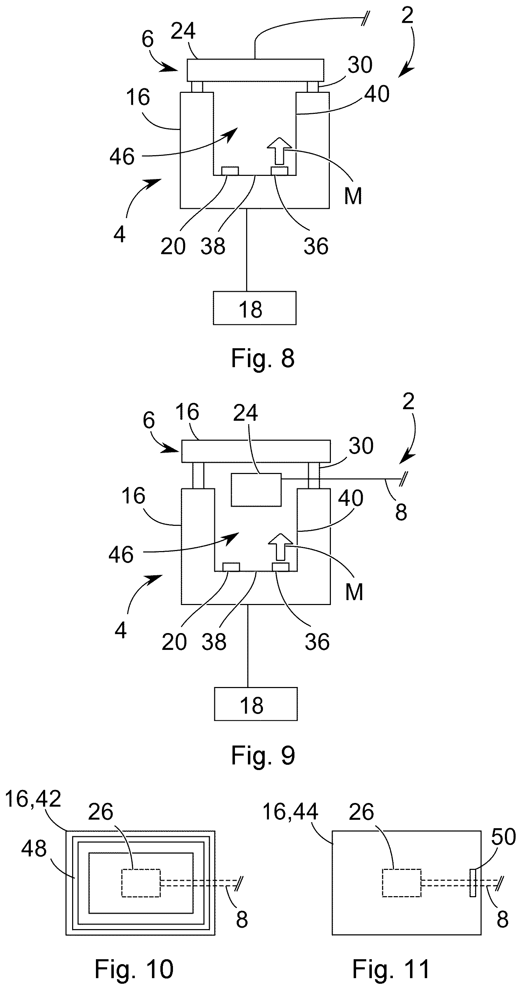

Die Dichtung 30 als Teil des Endstücks 6 ist beispielsweise wie in Fig. 8 gezeigt eine Längsdichtung, welche beim Anschließen des Endstücks 6 an ein komplementäres Gegenstück in Steckrichtung (d.h. Längsrichtung) gegen das Gegenstück gedrückt wird und dadurch dichtet. Alternativ oder zusätzlich ist die Dichtung 30 ein Teil des Dichtkäfigs 16 und nicht zwingend ein Teil des Endstücks 6, d.h. ein oder mehrere (z.B. alle) Dichtkäfige 16 weisen jeweils eine Dichtung 30 auf, zum Abdichten gegenüber dem jeweiligen Endstück 6. Dies kann in allen gezeigten Ausführungsbeispielen umgesetzt sein. Die Abdichtung gegenüber dem jeweiligen Endstück 6 erfolgt in den Fig. 3, 4 und 8 dadurch, dass die Dichtung 30 am Gehäuse 24 des Endstücks 6 dichtend anliegt. Unabhängig davon, ob die Dichtung 30 ein Teil des Endstücks 6 oder des Dichtkäfigs 16 ist, ist bei einer Ausgestaltung des Endstücks 6 als ein Steckverbinder der Dichtkäfig 16 beispielsweise nach Art eines Gegensteckverbinders für diesen Steckverbinder ausgebildet, d.h. wie der passende Gegensteckverbinder geformt, jedoch insbesondere ohne etwaige elektrische oder hydraulische Anschlüsse usw., d.h. sozusagen als "blinder" Gegensteckverbinder.

Als Alternative zu einer Abdichtung des Dichtkäfigs 16 gegen das Endstück 6 mittels einer Dichtung 30 wie in den Fig. 3, 4 und 8 gezeigt ist auch eine Ausgestaltung möglich, bei welcher das Endstück 6 z.B. wie in den Fig. 9 bis 11 gezeigt vollständig von dem Dichtkäfig 16 umschlossen ist. Dabei zeigen die Fig. 9 bis 11 dasselbe Ausführungsbeispiel in unterschiedlichen Ansichten. Die Abdichtung erfolgt gegenüber dem Mantel 8, indem der Dichtkäfig 16 eine Dichtung 30 aufweist, welche am Mantel 8 anliegt. In der beispielhaft gezeigten Ausgestaltung weist zumindest einer der Dichtkäfige 16 zwei Teile 42, 44 auf, z.B. zwei Halbschalen oder wie hier gezeigt eine Schale 42 (Fig. 10) und einen Deckel 44 (Fig. 11), welche in zusammengesetztem Zustand einen Prüfraum 46 umschließen, in welchen das Endstück 6 vollständig eingesetzt ist. In Fig. 9 ist der komplette Dichtkäfig 16 in einer Seitenansicht gezeigt, in Fig. 10 nur das eine Teil 42 in einer Draufsicht und in Fig. 11 das andere Teil 44 ebenfalls in einer Draufsicht. Das Endstück 6 und der Mantel 8 sind in den Fig. 10 und 11 mit Strichlinien angedeutet. Das Endstück 6 ist von dem Dichtkäfig 16 vollständig umschlossen. Der Dichtkäfig 16 weist eine Dichtung 30 auf, welche die beiden Teile 42, 44 gegeneinander abdichtet. Der Mantel 8 ist durch die Dichtung 16 aus dem Prüfraum 46 herausgeführt, sodass die Dichtung 30 vollumfänglich dichtend am Mantel 8 anliegt. Die Dichtung 30 weist hierfür einen Durchlass für den Mantel 8 (und den Leiter 12) auf. Im hier gezeigten Ausführungsbeispiel ist die Dichtung 30 zweiteilig ausgebildet, mit einem ersten Dichtteil 48 (z.B. Dichtring), welches den Prüfraum 46 vollständig umläuft (Fig. 10), und mit einem zweiten Dichtteil 50 (Fig. 11, z.B. Dichtstreifen), welcher mit dem ersten Dichtteil 48 an einer Stelle den Durchlass für den Mantel 8 bildet, sodass dieser beidseitig von der Dichtung 30 eingefasst ist.

Die beiden Varianten mit Abdichtung gegen das Endstück 6 (Fig. 3, 4 und 8) und mit zweiteiligem Dichtkäfig 16 (Fig. 9 bis 11) sind auch derart kombinierbar, dass für ein oder mehrere Endstücke 6 eine Abdichtung gegenüber dem Endstück 6 selbst erfolgt und für ein oder mehrere andere Endstücke 6 eine Abdichtung gegenüber dem Mantel 8, sodass das jeweilige Endstück 6 vom Dichtkäfig 16 vollständig umschlossen ist.

Mit dem Verfahren erfolgt eine synchronisierte und komplexe Dichtigkeitsprüfung. Anstatt die verschiedenen Endstücke 6 des Kabels 4 unabhängig voneinander zu prüfen, wie z.B. in Fig. 2 gezeigt, werden diese gleichzeitig mit einem jeweiligen Druck beaufschlagt, um eine Verfälschung des Prüfergebnisses durch den parasitären Hohlraum 14 zu reduzieren oder sogar gänzlich zu vermeiden. Hierbei wird ausgenutzt, dass bei gleichzeitigem Anlegen eines Drucks an allen Enden des parasitären Hohlraums 14 eine zusätzliche Leckage über diesen Hohlraum 14 nicht mehr möglich ist oder zumindest nur eingeschränkt im Rahmen von gegebenenfalls unterschiedlichen Drücken an den Endstücken 6. In jedem Fall wird aber die Genauigkeit der Dichtigkeitsprüfung erhöht.

Fig. 2 verdeutlich das Problem, dass die Genauigkeit einer Dichtigkeitsprüfung an einem Kabel 2 konstruktionsbedingt beschränkt sein kann. Bei Litzenleitern mit endseitig angebrachten Crimps wird keine vollständige Abdichtung entlang des Leiters 10 erreicht, sodass hier das Prüfmedium M entweichen oder einströmen kann. Wie bereits oben beschrieben sind zwischen den einzelnen Drähten 22 des Leiters 10 einerseits sowie gegebenenfalls auch zwischen den Drähten 22 und dem Mantel 9 andererseits z.B. Zwickel gebildet, welche dann einen oder mehrere parasitäre Hohlräume 14 bilden, durch welche das Prüfmedium M entweichen oder einströmen kann. Bei der Dichtigkeitsprüfung ergibt sich ein entsprechender Druckverlust, welcher in Fig. 2 durch den Pfeil 32 verdeutlicht ist, welcher die Strömungsrichtung des Prüfmediums M angibt (hier für den Fall eines Überdrucks). Im Gegensatz dazu werden vorliegend Beginn und Durchführung der verschiedenen Messungen zur Dichtigkeitsprüfung für die diversen Endstücke 6 soweit wie möglich synchronisiert und gleichzeitig durchgeführt, sodass sich die zusätzlichen Leckagen in den parasitären Hohlraum 14 gegenseitig soweit wie möglich aufheben, wie durch die beiden Pfeile 34 in Fig. 3 angedeutet ist.

Ein jeweiliger Dichtkäfig 16 der Prüfvorrichtung 4 dient als Aufnahme für ein jeweiliges Endstück 6. Die Dichtkäfige 16 müssen nicht zwingen gleichartig ausgebildet sein, gleiches gilt für die Endstücke 6. Ein jeweiliger Dichtkäfig 16 weist eine Medienzufuhr 36 für das Prüfmedium M auf. Über die Medienzufuhr 36 wird das Prüfmedium M zum Endstück 6 geströmt und dieses dann mit einem entsprechenden Druck beaufschlagt. Hierzu ist das Endstück 6 gegen den Dichtkäfig 16 abgedichtet oder von diesem abgedichtet umschlossen und der Dichtkäfig 16 selbst dann auch dicht. In den hier gezeigten Beispielen weist der Dichtkäfig 16 eine Vertiefung auf, mit einem Grund 38 und einer Wandung 40, welche den Grund 38 umläuft. Das Endstück 6 wird in Richtung des Grunds 38 in den Dichtkäfig 6 eingesetzt und gegen die Wandung 40 abgedichtet (Fig. 3, 4 und 8), z.B. durch die bereits genannte Dichtung 30 als Teil des Endstücks 6, oder von einem zweiteiligen Dichtkäfig 16 abgedichtet umschlossen (Fig. 9 bis 11). Zwischen dem Endstück 6 und dem Grund 38 ist nun ein Volumen (Prüfraum 46) ausgebildet, in welches das Prüfmedium M eingeströmt wird. Durch die Abdichtung wird dabei ein entsprechender Druck aufgebaut, welcher größer als der Umgebungsdruck ist, sodass das Prüfmedium M durch etwaige Leckagen in die Umgebung strömt, was dann mit dem entsprechenden Sensor 20 gemessen wird. In den Fig. 3, 4, 8 und 9 ist der Sensor 20 in den Grund 38 integriert kann aber auch in die Wandung 40 integriert sein oder separat ausgebildet und dann z.B. über eine geeignete Leitung mit dem Volumen im Dichtkäfig 16 verbunden sein.

### Bezugszeichenliste

- 2: Kabel
- 4: Prüfvorrichtung
- 6: Endstück
- 8: Mantel
- 10: Leiter
- 12: Innenraum
- 14: (parasitärer) Hohlraum
- 16: Dichtkäfig
- 18: Steuereinheit
- 20: Sensor
- 22: Draht
- 24: Gehäuse
- 26: Terminal
- 28: Öffnung (Steckgesicht)
- 30: Dichtung
- 32: Pfeil
- 34: Pfeil
- 36: Medienzufuhr
- 38: Grund
- 40: Wandung
- 42: Teil des Dichtkäfigs (Schale)
- 44: Teil des Dichtkäfigs (Deckel)
- 46: Prüfraum
- 48: erster Dichtteil (Dichtring)
- 50: zweiter Dichtteil (Dichtstreifen)
- M: Prüfmedium
- S1: erster Schritt (Endstücke in Dichtkäfige einsetzen)
- S2: zweiter Schritt (Drücke einstellen)
- S3: dritter Schritt (Dichtigkeitsprüfung)

## Patentansprüche

1. Verfahren zur Dichtigkeitsprüfung an einem Kabel (2) mittels einer Prüfvorrichtung (4),
a. wobei das Kabel (2) wenigstens zwei Endstücke (6), einen Mantel (8) und einen Leiter (10) aufweist,
b. wobei der Mantel (8) und der Leiter (10) sich zwischen den beiden Endstücken (6) erstrecken,
c. wobei der Mantel (8) einen Innenraum (12) umschließt, in welchem der Leiter (10) angeordnet ist,
d. wobei das Kabel (2) innerhalb des Innenraums (12) einen parasitären Hohlraum (14) aufweist, durch welchen zwischen den Endstücken (6) eine fluidische Verbindung ausgebildet ist,
e. wobei die Prüfvorrichtung (4) für jedes Endstück (6) einen Dichtkäfig (16) aufweist, in welchem mit einem Prüfmedium (M) ein Druck einstellbar ist,
f. wobei jedes Endstück (6) in einen der Dichtkäfige (16) eingesetzt wird oder ist, sodass der parasitäre Hohlraum (14) mit den Dichtkäfigen (16) fluidisch verbunden ist,
g. wobei mittels des Prüfmediums (M) eine Dichtigkeitsprüfung an wenigstens einem der Endstücke (6) durchgeführt wird, während in allen Dichtkäfigen (16) ein jeweiliger Druck eingestellt ist.

2. Verfahren nach Anspruch 1,
wobei für die Dichtigkeitsprüfung in allen Dichtkäfigen (16) der gleiche Druck eingestellt wird.

3. Verfahren nach einem der Ansprüche 1 bis 2,
wobei bei der Dichtigkeitsprüfung gleichzeitig eine Dichtigkeit aller Endstücke (6) geprüft wird.

4. Verfahren nach einem der Ansprüche 1 bis 3,
wobei die Prüfvorrichtung (4) eine Steuereinheit (18) aufweist, welche überwacht, ob alle Endstücke (6) in einen jeweiligen Dichtkäfig (16) eingesetzt sind, und welche die Dichtigkeitsprüfung erst dann zulässt, wenn alle Endstücke (6) in einen jeweiligen Dichtkäfig (16) eingesetzt sind.

5. Verfahren nach einem der Ansprüche 1 bis 4,
wobei die Dichtkäfige (16) jeweils einen Sensor (20) aufweisen, mit welchem bei der Dichtigkeitsprüfung ein Entweichen oder ein Einströmen des Prüfmediums (M) gemessen wird.

6. Verfahren nach einem der Ansprüche 1 bis 5,
wobei für jedes Endstück (6) eine Leckage gemessen wird und dasjenige Endstück (6) als undicht erkannt wird, welches die größte Leckage aufweist.

7. Verfahren nach einem der Ansprüche 1 bis 6,
wobei der Leiter (10) ein Litzenleiter mit mehreren Drähten (22) ist, wobei der parasitäre Hohlraum (14) wenigstens einem Zwickel entspricht, welcher durch die Drähte (22) gebildet ist.

8. Verfahren nach einem der Ansprüche 1 bis 7,
wobei der parasitäre Hohlraum (14) zwischen dem Mantel (8) und dem Leiter (10) ausgebildet ist.

9. Verfahren nach einem der Ansprüche 1 bis 8,
wobei wenigstens eines der Endstücke (6) ein Steckverbinder ist.

10. Verfahren nach einem der Ansprüche 1 bis 9,
wobei wenigstens eines der Endstücke (6) ein Gehäuse (24) aufweist und ein Terminal (26), welches endseitig an dem Leiter (10) befestigt ist und in das Gehäuse (24) eingesetzt ist,
wobei das Terminal (26) vorzugsweise ein Isolationscrimp ist, welcher zusätzlich auch am Mantel (8) befestigt ist.

11. Verfahren nach einem der Ansprüche 1 bis 10,
wobei ein oder mehrere Endstücke (6) jeweils eine Dichtung (30) aufweisen, zum Abdichten gegenüber dem jeweiligen Dichtkäfig (16), und/oder wobei ein oder mehrere Dichtkäfige (16) jeweils eine Dichtung (30) aufweisen, zum Abdichten gegenüber dem jeweiligen Endstück (6).

12. Verfahren nach einem der Ansprüche 1 bis 11,
wobei zumindest einer der Dichtkäfige (16) zwei Teile (42,44) aufweist, welche in zusammengesetztem Zustand einen Prüfraum (46) umschließen, in welchen das Endstück (6) vollständig eingesetzt ist.

13. Verfahren nach Anspruch 12,
wobei der Dichtkäfig (16) eine Dichtung (30) aufweist, welche die beiden Teile (42,44) gegeneinander abdichtet und durch welche hindurch der Mantel (8) aus dem Prüfraum (46) herausgeführt ist.

14. Verfahren nach einem der Ansprüche 1 bis 13,
wobei der Druck, welcher eingestellt wird, ein Überdruck ist, größer als ein Umgebungsdruck ist und/oder größer als 1,1 bar ist.

15. Prüfvorrichtung (4), welche ausgebildet ist zur Durchführung eines Verfahrens nach einem der Ansprüche 1 bis 14.
